# EUROPEAN PATENT SPECIFICATION

(11) **EP 3 131 387 B1**
(45) Date of publication and mention of the grant of the patent: **07.11.2018**
(21) Application number: 15722276.1
(22) Date of filing: 09.04.2015
(51) Int. Cl.: A01K 29/00, A01K 5/01, A01K 7/02

(54) **ANIMAL SHED, COMPRISING AT LEAST ONE FEEDING DEVICE AND AT LEAST ONE SEPARATE WATERING DEVICE**
TIERHÜTTE MIT MINDESTENS EINER FÜTTERUNGSVORRICHTUNG UND MINDESTENS EINER GETRENNTEN BEWÄSSERUNGSVORRICHTUNG
ABRI POUR LES ANIMAUX, COMPRENANT AU MOINS UN DISPOSITIF D'ALIMENTATION ET AU MOINS UN DISPOSITIF D'ABREUVEMENT DISTINCT

(30) Priority: 17.04.2014 NL 2012645
(43) Date of publication of application: 22.02.2017
(73) Proprietor: Lely Patent N.V., 3147 PB Maassluis (NL)
(72) Inventor: VAN DEN BERG, Karel, 3147 PB Maassluis (NL)
(74) Representative: Octrooibureau Van der Lely N.V.
(86) International application number: PCT/NL2015/050230
(87) International publication number: WO 2015/160241

(56) References cited:
- EP-A1- 0 659 337
- EP-B1- 1 224 857
- WO-A1-03/094605
- WO-A1-2010/091686
- WO-A1-2013/095122
- NL-A- 9 200 833
- US-A- 4 463 706

## Description

The invention relates in general to an animal shed for accommodating a number of dairy animals.

The invention relates in particular to an animal shed for accommodating a number of dairy animals, comprising at least one feeding device for providing feed, including concentrated feed, to the dairy animals, configured to dose the feed for individual dairy animals; and control means, configured to determine the identity of an individual dairy animal at the feeding device and, on the basis of the determined identity, to determine a dose and/or composition of the feed to be provided to said dairy animal by the feeding device.

An animal shed provided with a system for determining and controlling the supply of consumable matter to dairy animals is known, for example, from WO-2008/048180-A1 or EP1224857. The system comprises a supply device for supplying the matter to a feeding trough from which the animals can eat and/or drink, and a control unit which controls the supply of the matter to the feeding trough. The system also has an analysis device for analysing milk from an individual dairy animal with regard to at least one property of the milk. The control unit is arranged so as to be able to receive information from the analysis device and to automatically control the composition of the consumable matter supplied to the feeding trough, in dependence on the information received from the analysis device.

The known system for determining and controlling the supply of consumable matter to dairy animals is used to automatically detect and treat various undesired physiological conditions of dairy animals. This may promote the health of the animals and/or maintain the level of milk production of the animals. In particular, the milk from each dairy animal is analysed to determine whether additives to the feed for the relevant dairy animal are required. In a practical embodiment, the system is further configured to recognize individual animals at the feeding trough. It is also possible to take into account other information relating to a certain dairy animal when determining the supply of the matter for the dairy animal, for example whether the animal has recently had a calf.

The operation of the known system is based on the assumption that all dairy animals feed at the feeding trough. In practice, however, it appears that some animals in a group of dairy animals in an animal shed, for example 5% of the total group, avoid the feeding trough, leading to the risk that these animals consume too little feed, which can have a negative effect on the condition and/or milk production of these animals. It is an object of the invention to provide a solution to this problem. In particular, it is an object of the invention to provide an animal shed which is configured in such a way as to ensure that all dairy animals in the animal shed consume an adequate amount of concentrated feed, wherein the dose and/or composition of the concentrated feed can be adapted to the individual requirements of the animals.

The invention provides an animal shed according to claim 1 for accommodating a number of dairy animals, comprising at least one feeding device for providing feed, including concentrated feed, to the dairy animals, configured to dose the feed for individual dairy animals; and control means, configured to determine the identity of an individual dairy animal at the feeding device and, on the basis of the determined identity, determine a dose and/or composition of the feed to be provided to said dairy animal by the feeding device. The animal shed according to the invention further comprises at least one separate watering device for watering the dairy animals, configured to allow the dairy animals to drink drinking water on an individual basis; and supply means for supplying concentrated feed, in particular at least one out of water-soluble concentrated feed and water-miscible concentrated feed, to the drinking water to be provided to the dairy animals by the watering device, wherein the control means are further configured to determine the identity of an individual dairy animal at the watering device and, on the basis of the determined identity, determine a dose and/or composition of the concentrated feed to be supplied to the drinking water for said dairy animal.

The invention is based on the insight that all dairy animals in an animal shed have the tendency to drink on a regular basis. For the animals which eat little and therefore consume less concentrated feed than is desired, it is then possible to provide a better guarantee that these animals consume the correct amounts of concentrated feed by providing a watering facility in the animal shed. The application of the invention also makes it possible to guarantee that animals which temporarily require extra concentrated feed actually receive the desired increased amount, possibly without it being necessary to bring these animals to consume more feed at the feeding device.

As described above, the animal shed according to the invention comprises at least one feeding device for providing feed, including concentrated feed, to the dairy animals, configured to dose the feed for individual dairy animals. The feeding device serves to provide the animals with feed, including in dry form or as slurry, i.e. a mixture of dry material with water. The animal shed further comprises control means which are configured to determine the identity of an individual dairy animal at the feeding device and, on the basis of the determined identity, to determine a dose and/or composition of the feed to be provided to said dairy animal by the feeding device. On this basis it is possible to provide each dairy animal with a suitable amount of feed as soon as the animal reaches the feeding device. The control means may, for example, be actively connected to a camera for detecting individual dairy animals, or may be configured to distinguish, on the basis of techniques such as Bluetooth or RFID (radio frequency identification), where each dairy animal is situated in the animal shed or to at least be able to detect and identify animals as soon as they reach the feeding device or the watering device.

According to the invention, the animal shed is provided with at least one separate watering device, i.e. a watering device which does not coincide with the feeding device. The watering device may in principle be provided in such a way that it can be accessed by the dairy animals from the same place as the feeding device. However, the watering device is in particular provided in a different location to the feeding device, so that the dairy animal has to move from the feeding device to the watering device and vice versa. This has the result that the dairy animals associate drinking with a different location in the animal shed than feeding. This is especially important for those animals that are not inclined or are hardly inclined to visit the feeding device on a regular basis, to such an extent that they do not receive the amount of feed which would be good for them. According to the invention, it is not necessary to take any measures to correct the behaviour of such animals, as the invention makes it possible to provide concentrated feed to such animals via the watering device. Using the control means, it is possible to identify such an animal at the watering device and to supply an amount of concentrated feed to the drinking water to be provided which is tailored to the animal.

For the sake of clarity, it should be noted that the watering device is primarily configured to provide the dairy animals with drinking water, wherein a component of concentrated feed may also be added to the drinking water for certain dairy animals, whereas this is clearly different for the feeding device. It may be the case that water is used in the feeding device in order to be able to provide feed in a wet form, which is therefore easier for the animals to eat. Even in that case, however, the difference from drinking water will still be apparent. In the watering device, the maximum percentage by weight of concentrated feed in the drinking water will usually be 20%, whereas, by contrast, (dry) feed is in principle provided in the feeding device and is optionally provided with a fraction of water or the like, such as a maximum of 20% water being added to the feed.

In an embodiment of the invention, the animal shed comprises detection means for detecting at least one drinking characteristic of a dairy animal during watering of the dairy animal in the watering device. It is practical, for example, to measure the volume of drinking water consumed by the animal per unit time, so that this information can be taken into account by the control means in determining a suitable amount of concentrated feed to be supplied to the water for those cases when the watering device is used to feed an animal, wherein a maximum in terms of the amount to be supplied is associated with the desire not to disturb the drinking experience of the animal, therefore with the desire to ensure that the animal does not notice the supply of concentrated feed. In general terms, it is advantageous if the detection means are actively connected to the control means, wherein the control means are in that case configured to determine, on the basis of the drinking characteristic, the dose and/or composition of the concentrated feed to be supplied to the drinking water for the dairy animal.

The control means may comprise a memory for storing information from the detection means relating to the drinking characteristic of an individual dairy animal, wherein the control means are configured to determine, on the basis of said information, the dose and/or composition of the concentrated feed to be supplied to the drinking water for said dairy animal. If, in connection with a certain dairy animal, information is available relating to the drinking characteristic during previous waterings of said animal, this information may be used to be able to anticipate the drinking characteristic during a new watering and to be able to adapt the dose and/or composition of the concentrated feed to be supplied to the drinking water partially on this basis.

In general, it is practical if the control means are designed to provide, with the aid of the feeding device and the supply means, a predetermined feed ration to a dairy animal, in particular per day. When determining a dose of feed in the feeding device, and an additional dose of concentrated feed in the watering device, it is then possible to directly take the feed ration into account, which in any case prevents too much feed from being provided to a dairy animal. It should be noted in this case that the dosed feed, including the feed provided in the drinking water, is usually concentrated feed, with roughage often being provided *ad libitum.* The latter method does limit the accuracy of detecting the supply of energy and the like, but still supplies valuable management information. In animal sheds where the amount of roughage given is also determined and measured at least partially individually, even better management information is of course available. Within the context of the invention, the information relating to the feed ration can be used to determine whether it is at all necessary to give a certain animal additional feed via the watering device. In particular, if information is available that the animal is not receiving the prescribed amount of feed via the feeding device, the watering device will be used to bring the animal's consumption of concentrated feed up to the required level. If, on the contrary, the animal is consuming an adequate amount of feed by means of the feeding device, the dose of concentrated feed in the watering device may be zero.

The control means may be configured to determine, on the basis of at least one item of data relating to the individual dairy animal, the feed ration for said dairy animal in a manner known per se, wherein the at least one item of data in particular comprises a milk yield of the dairy animal, a lactation phase of the dairy animal, a body condition score of the dairy animal or a weight of the dairy animal. Such data can be readily linked to a desired feed ration, wherein linking to other data such as health data is not excluded.

In order to correctly align the actual consumption of feed by an animal with a ration determined for the animal, it is practical if detection means are provided in the animal shed which are configured to detect an amount of feed which is consumed by an individual dairy animal in the feeding device and the watering device, wherein the control means are configured to determine, on the basis of the detected amount of feed, the dose and/or composition of the concentrated feed to be supplied to the drinking water for said dairy animal. Such a determination may, for example, use the technology which is also used to determine the amount of feed to be given in the feeding device. On the basis of using the detection means as mentioned, it is possible to track any differences between an amount of feed which is provided to an animal in the feeding device and an amount of feed which is actually consumed by the animal. This benefits the accuracy of determining the dose of feed in the feeding device and of concentrated feed in the watering device. Such detection means comprise, for example, weighing means which weigh how much feed is dosed in the feeding device, and how much remains after a feeding, with the difference representing the amount of feed consumed. A similar process also applies to the watering device, in which the dosed amount of water has to be subtracted. A difficulty here, is that if the concentration of feed in the water is not constant, determination of the the net amount of consumed feed is hard. This is why it is advantageous to keep this concentration constant, or to only dose when the dairy animal is not drinking, so that it is possible to determine said residual amount in the meantime, and so that the final concentration is known.

In an advantageous embodiment, the watering device is configured to provide drinking water to dairy animals in flowing form. If it is desired to provide a dairy animal with concentrated feed via the drinking water, the concentrated feed can be introduced into a stream of drinking water in successive portions, which ensures that the concentrated feed is thoroughly mixed and/or dissolved. In such a case, the supply means for supplying concentrated feed to the drinking water are configured to introduce the concentrated feed into a stream of drinking water. It is also possible to use means which are movable in the stream of drinking water containing concentrated feed to promote distribution of the concentrated feed in the drinking water, which means may comprise, for example, a rotatable spiral element.

In general, the watering device may comprise a trough which is suitable for watering only a single dairy animal. Provisions may be made for any residual amount of drinking water containing concentrated feed to be removed from the watering device at the end of watering a dairy animal, so that, if desired, it is possible to take this amount into account when determining the consumption of the dairy animal during the watering, and so that it is not possible for this amount to be accidentally consumed by another dairy animal.

Within the context of the invention, the animal shed may be provided with a multiplicity of watering devices. In such a case, a central buffer with drinking water may also be used in the animal shed, with it being possible in that case for each of the watering devices to be provided with drinking water from this central buffer. In this way, it is possible to quickly and easily anticipate the drinking requirements of the dairy animals in the animal shed using a relatively simple construction.

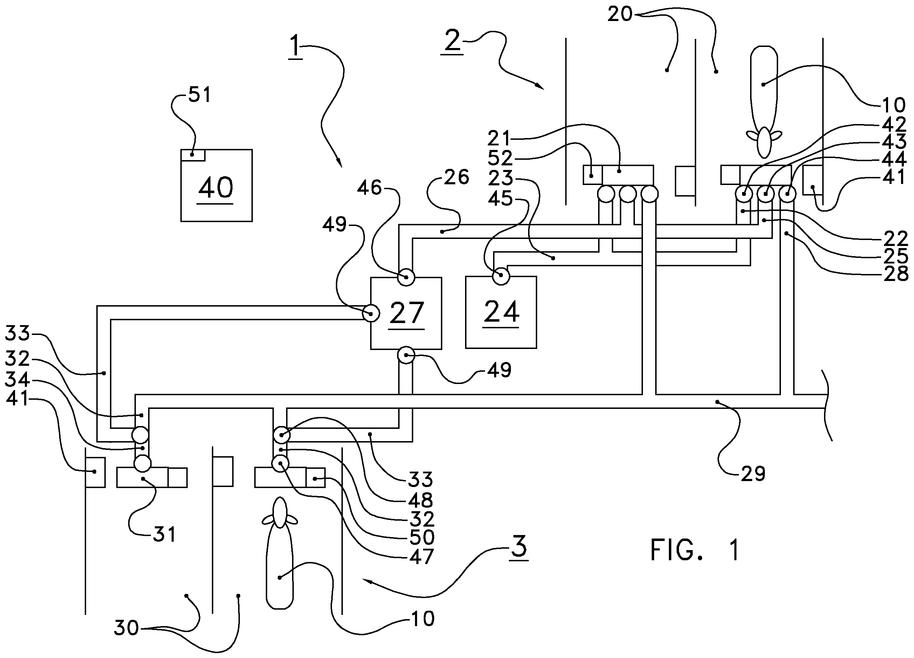

The invention will be explained below with reference to the drawing, which shows a non-limiting illustrative embodiment of the invention, and in which Figure 1 diagrammatically shows components of an animal shed for accommodating a number of dairy animals and illustrates how these components relate to one another.

Figure 1 shows components of an animal shed 1 for accommodating a number of dairy animals 10, such as dairy cows. The animal shed 1 may comprise more components than those shown. The Figure only shows the components which are relevant to the explanation of the invention.

Two separate areas can be distinguished within the animal shed 1 in which a dairy animal 10 can temporarily be in isolation from the other dairy animals 10. The first area 2 is a feeding area 2, i.e. an area where the dairy animals 10 can consume feed, and the second area 3 is a watering area, i.e.an area where the dairy animals 10 can consume drinking water. Both the feeding area 2 and the watering area 3 contain at least one delimited space 20, 30 in which a dairy animal 10 can isolate itself in order to eat or drink, respectively. In the example shown, each area 2, 3 contains two such spaces 20, 30, which does not preclude the number of spaces 20, 30 in each area 2, 3 being considerably greater in practice.

Each of the spaces 20 of the feeding area 2 contains a feeding trough 21 which is connected via a first supply pipe 22 to a central pipe 23 for conveying roughage from a roughage reservoir 24, is connected via a second supply pipe 25 to a central pipe 26 for conveying concentrated feed from a concentrated feed reservoir 27, and is connected via a third supply pipe 28 to a central water pipe 29. Each of the spaces 20 also contains a camera 41 connected to a central control unit 40 for identifying the dairy animals 10. For the sake of completeness, it should be noted that other methods of identification may be used within the scope of the invention. In any case, identification of dairy animals in an animal shed is generally known and does not require any further explanation in the context of the present invention.

The central control unit 40 is configured to determine, on the basis of the determined identity of a dairy animal 10 in a space 20 in the feeding area 2, the dose and composition of the feed to be provided to the animal 10. In the example shown, the feed may consist solely of roughage, or of a combination of roughage and concentrated feed, optionally diluted with water. In order to ensure a dose and composition of feed, determined by the central control unit 40, for a dairy animal 10 in a space 20, each of the supply pipes 22, 25, 28 is provided with a valve 42, 43, 44 which is controllable by the central control unit 40.

When a dairy animal 10 enters a space 20 in the feeding area 2, the animal 10 is identified with the aid of the camera 41. The central control unit 40 then determines the desired supply of feed for the animal 10, in terms of both the amount and the composition. The desired supply is realized by the central control unit by controlling the valves 42, 43, 44 in the supply pipes 22, 25, 28 of the space 20 in order to dispense suitable amounts of roughage and/or concentrated feed, optionally diluted with an amount of water. Means 45, 46 are arranged in a manner known per se at positions between the central pipes 23, 26 and the roughage reservoir 24 and the concentrated feed reservoir 27, respectively, in order to regulate the supply of feed from the reservoirs 24, 27 to the pipes 23, 26 and to further transport feed through the pipes 23, 26 to the supply pipes 22, 25, 28 of each of the spaces 20.

Each of the spaces 30 of the watering area 3 contains a watering point 31 which is connected via a primary supply pipe 32 to the central water pipe 29. A valve 47 is provided in the primary supply pipe 32 in a position at the watering point 31, which valve 47 may be operable by the dairy animals in a manner known per se, or may be operable by the central control unit 40. The primary supply pipe 32 of each of the spaces 30 is also connected via a secondary supply pipe 33 to the concentrated feed reservoir 27. A camera 41 which is connected to the central control unit 40 is also arranged in each of the spaces 30 of the watering area 3, in a similar manner to the feeding area 2, in order to identify the dairy animals 10.

When a dairy animal 10 is located in a space 30 in the watering area 3, it will in any case be provided with drinking water, in flowing form, via the watering point 31. The animal 10 is also identified with the aid of the camera 41. The central control unit 40 is configured to determine, on the basis of the determined identity of the animal 10, whether it is necessary to provide the animal 10 with concentrated feed while it is drinking and, if that is the case, what the dose of concentrated feed should be. In order to realize a dose of concentrated feed, determined by the central control unit 40, for a dairy animal 10 in a space 30, a valve 48 is provided in each of the secondary supply pipes 33, which valve 48 is controllable by means of the central control unit 40. In the example illustrated, there is only one concentrated feed reservoir 27, but this does not preclude there being a plurality of reservoirs for a plurality of types of concentrated feed, in which case the central control unit 40 is not only configured to determine the dose of the concentrated feed for a certain dairy animal 10, but also the composition of the concentrated feed. In any case, it is practical if the concentrated feed which is provided to the dairy animals 10 via the drinking water is of the type which is readily water-soluble or readily water-miscible.

The possibly desired supply of concentrated feed to a dairy animal 10 in a space 30 in the watering area 3 is realized by the central control unit by controlling the valve 48 in the secondary supply pipe 33 of the space 30. The valve 48 of the secondary supply pipe 33 is located in a position which is further away from the watering point 31 than the valve 47 of the primary supply pipe 32. In this way, there is an end section 34 of the primary supply pipe 32 in which the concentrated feed and a stream of drinking water can be mixed. Means may possibly be arranged in this end section 34 to aid the mixing of the concentrated feed and the water. The valve 48 in the secondary supply pipe 33 may be controlled, for example, so as to always be able to dispense discrete portions of concentrated feed into the water stream, or a continuous stream of concentrated feed which is adapted to the water stream in such a way that the drinking experience of the dairy animal 10 is not disturbed and the animal 10 does not notice the presence of the concentrated feed in the drinking water. Means 49 are arranged at positions between the secondary pipes 33 of the spaces 30 of the watering area 3 and the concentrated feed reservoir 27 in a manner known per se in order to regulate the supply of feed from the reservoir 27 to the pipes 33 and to realize further transport of feed through the pipes 33 to the primary supply pipes 32 of each of the spaces 30. Both primary supply pipes 32 may possibly be connected to the concentrated feed reservoir 27 in the same position via the means 49, wherein the means 49 may be provided with a switch which is operable by the central control unit 40 in order to be able to select, at any time, the primary supply pipe 32 which must be placed in open communication with the concentrated feed reservoir 27.

Since, in the animal shed 1 as described above, it is possible to provide the dairy animals 10 with concentrated feed not only in the feeding area 2 but also in the watering area 3, it is possible to ensure that an animal 10 which tends not to eat or hardly to eat and therefore does not go or hardly goes to the feeding area 2 still consumes a set concentrated feed ration. It is also possible to provide an animal 10 which needs extra concentrated feed at a certain time with this extra concentrated feed via the watering area 3. It is then not necessary to disturb the normal eating pattern of the animal 10. In general, the animal shed 1 is set up in such a way as to guarantee a set consumption of concentrated feed by the dairy animals 10 present in the animal shed 1 without influencing the feeding behaviour of the animals 10. Use is made of the fact that each animal 10 always consumes a certain amount of drinking water, for example approximately 100 litres per day. It is possible to provide an animal 10 with 5 kg of concentrated feed in this amount of drinking water without disturbing the drinking experience of the animal 10.

Both the provision of feed in the feeding area 3 and the provision of concentrated feed in the watering area 2 are regulated by the central control unit 40. For reasons of clarity, connections between the central control unit 40 and other components in the animal shed 1, such as the various cameras 41 and valves 42, 43, 44, 47, 48, are not shown in the figure. As noted earlier, the intention in providing the concentrated feed to a dairy animal 10 via the drinking water is to dose the concentrated feed in such a way that the animal 10 continues to experience the consumption of drinking water as drinking. For this purpose, it is desirable to have information about the drinking behaviour of the dairy animal 10, in particular about the amount of water consumed per unit time. Suitable drinking detection means 50 may therefore be present in each space 30 of the watering area 3, which detection means 50 are configured to detect, during a watering of the animal 10, at least one drinking characteristic, a practical example being said amount of water consumed per unit time, and which are connected to the central control unit 40. In that case, the central control unit 40 is configured to take into account information provided by the drinking detection means 50 on the current drinking behaviour of the animal 10 in determining the degree to which concentrated feed is provided to the animal 10 via the water, and possibly also the composition of the concentrated feed, if possible. It is also an option in this case to take into account information about previous drinking behaviour of the animal 10, based on the assumption that the animals 10 display reasonably consistent drinking behaviour each time they drink, so that it is possible to predict, as it were, the current drinking behaviour. It is then practical for the central control unit 40 to be provided with a memory 51 in which said information can be stored.

It is practical for the central control unit 40 to make use of a predetermined feed ration for a certain dairy animal 10, in particular per day, when determining whether it is necessary to supply concentrated feed via the drinking water for said animal 10. The feed ration may vary over time and may be set, for example, on the basis of information relating to a milk yield of the animal 10 and/or information relating to a lactation phase of the animal 10. Setting a feed ration for dairy animals in an animal shed in such a way is known per se and does not require any further explanation in the context of the present invention.

Just as it is advantageous to have drinking detection means 50 in the spaces 30 of the watering area 3 to detect at least one aspect of the drinking behaviour of a dairy animal 10, it is also advantageous to use feeding detection means 52 in the spaces 20 of the feeding area 2 to detect an amount of feed which is actually consumed by a dairy animal 10 in the feeding area 2. It is not guaranteed that an animal 10 will consume all of the amount provided to it in the feeding area 2 and it therefore benefits the accuracy of the total provision of feed, via the feeding area 2 and possibly also via the watering area 3, if it is possible to detect the amount ultimately consumed by an animal 10. Assuming that the feeding detection means 52 are connected to the central control unit 40, the central control unit 40 can process information from the feeding detection means 52 when determining a dose and/or composition of concentrated feed to be provided via the watering area 3.

The memory 51 of the central control unit 40 may be suitable for storing information from the drinking detection means 50, as mentioned above, and additionally for storing information from the feeding detection means 52. This latter information may then be used when determining whether it is necessary to provide concentrated feed to a certain dairy animal 10 in the watering area 3. If this information reveals that the feeding behaviour of the animal 10 is such that it can be expected that the animal 10 consumes the full feed ration set for that animal 10 via the feeding area 2, this may be reason to only provide the animal 10 with drinking water in the watering area. 3.

It will be clear to a person skilled in the art that the scope of the invention is not limited to the examples discussed above, but that different variations and modifications thereof are possible without departing from the scope of the invention as defined in the attached claims.

The invention can be summarized as follows. An animal shed 1 contains at least one feeding device 2, 20 where dairy animals 10 can consume feed. The animal shed 1 also contains at least one separate watering device 3, 30 where the animals 10 can drink drinking water. On the basis of identification of an individual dairy animal 10 at the feeding device 2, 20, a dose and/or composition of the feed to be provided to the dairy animal 10 there is determined. The feed may comprise, for example, roughage and/or concentrated feed, optionally diluted with water. The watering device 3, 30 serves primarily to provide the animals 10 with drinking water, but can additionally be used to provide concentrated feed which is then dissolved in the drinking water and/or mixed with the drinking water. Determination of whether that is necessary and the dose and/or composition which then has to be used is based on identification of an individual dairy animal 10 at the watering device 3, 30, for which purpose suitable control means 40 are used. The control means 40 may be configured to use, when controlling the degree and the way in which concentrated feed is provided to a dairy animal 10 via the watering device 3, 30, current information relating to at least one drinking characteristic of said dairy animal 10, and possibly also information from previous waterings of the animal 10, information relating to a feed ration for said dairy animal 10, information relating to a milk yield from said dairy animal 10 information relating to a lactation phase of said dairy animal 10 and/or current information relating to the amount of feed consumed by the animal 10 in the feeding device 2, 20, and possibly also information from previous feedings of the animal 10, among other things.

## Claims

1. Animal shed (1)for accommodating a number of dairy animals (10), comprising
- at least one feeding device (2, 20) for providing feed, including concentrated feed, to the dairy animals (10), configured to dose the feed for individual dairy animals (10);
- control means (40), configured to determine the identity of an individual dairy animal (10) at the feeding device (2, 20) and, on the basis of the determined identity, to determine a dose and/or composition of the feed to be provided to said dairy animal (10) by the feed device (2, 20);
- at least one separate watering device (3, 30) for providing drinking water to the dairy animals (10), configured to water the dairy animals (10) on an individual basis;
- supply means (33) for supplying concentrated feed, in particular at least one out of water-soluble concentrated feed and water-miscible concentrated feed, to the drinking water to be provided to the dairy animals (10) by the watering device (3, 30), wherein the control means (40) are further configured to determine the identity of an individual dairy animal (10) at the watering device (3, 30) and, on the basis of the determined identity, to determine a dose and/or composition of the concentrated feed to be supplied to the drinking water for said dairy animal (10); and
- detection means (52) for detecting an amount of feed which is consumed by an individual dairy animal (10) in the feeding device (2, 20) and in the watering device (3, 30), wherein the control means (40) are configured to determine, on the basis of the detected amount of feed, the dose and/or composition of the concentrated feed to be supplied to the drinking water for said dairy animal (10).

2. Animal shed (1) according to Claim 1, comprising detection means (50) for detecting at least one drinking characteristic of a dairy animal (10) during watering of the dairy animal (10) in the watering device (3, 30), in particular the volume of liquid consumed per unit time.

3. Animal shed (1) according to Claim 2, wherein the control means (40) are actively connected to the detection means (50) and are configured to determine, on the basis of the drinking characteristic, the dose and/or composition of the concentrated feed to be supplied to the drinking water for the dairy animal (10).

4. Animal shed (1) according to Claim 2 or 3, wherein the control means (40) comprise a memory (51) for storing information from the detection means (50) relating to the drinking characteristic of an individual dairy animal (10), and wherein the control means (40) are configured to determine, on the basis of said information, the dose and/or composition of the concentrated feed to be supplied to the drinking water for said
dairy animal (10).

5. Animal shed (1) according to any of Claims 1-4, wherein the control means (40) are configured to provide, with the aid of the feeding device (2, 20) and the supply means (33), a predetermined feed ration to a dairy animal (10), in particular per day.

6. Animal shed (1) according to Claim 5, wherein the control means (40) are configured to determine the feed ration for the individual dairy animal (10) on the basis of at least one item of data relating to said dairy animal, wherein the at least one item of data in particular comprises a milk yield of the dairy animal, a lactation phase of the dairy animal, a body condition score of the dairy animal or a weight of the dairy animal.

7. Animal shed (1) according to any of Claims 1-6, wherein the watering device (3, 30) is configured to provide drinking water to dairy animals (10) in flowing form.

8. Animal shed (1) according to Claim 7, wherein the supply means (33) for supplying concentrated feed to the drinking water are configured to introduce the concentrated feed into a stream of drinking water.

## Patentansprüche

1. Stall (1) zum Unterbringen einer Anzahl an milcherzeugenden Tieren (10), die Folgendes umfasst
- wenigstens eine Fütterungsvorrichtung (2, 20) zum Bereitstellen von Futter, einschließlich Kraftfutter, für die milcherzeugenden Tiere (10), die ausgelegt ist, das Futter für individuelle milcherzeugende Tiere (10) zu dosieren;
- Steuermittel (40), die ausgelegt sind, die Identität eines individuellen milcherzeugenden Tiers (10) an der Fütterungsvorrichtung (2, 20) festzustellen und auf Basis der festgestellten Identität eine Dosis und/oder eine Zusammensetzung des dem milcherzeugenden Tier (10) durch die Fütterungsvorrichtung (2, 20) bereitzustellenden Futters festzulegen;
- wenigstens eine separate Tränkvorrichtung (3, 30) zum Bereitstellen von Trinkwasser für die milcherzeugenden Tiere (10), die ausgelegt ist, die milcherzeugenden Tiere (10) auf einer individuellen Basis zu tränken;
- Zufuhrmittel (33) zum Zuführen von Kraftfutter, insbesondere wenigstens eins aus wasserlöslichem Kraftfutter und wassermischbarem Kraftfutter, an das den milcherzeugenden Tieren (10) durch die Tränkvorrichtung (3, 30) bereitzustellende Trinkwasser, wobei die Steuermittel (40) weiterhin ausgelegt sind, die Identität eines individuellen milcherzeugenden Tiers (10) an der Tränkvorrichtung (3, 30) festzustellen und auf Basis der festgestellten Identität eine Dosis und/oder eine Zusammensetzung des dem Trinkwasser für das milcherzeugende Tier (10) zuzuführenden Kraftfutters festzulegen; und
- Erkennungsmittel (52) zum Erkennen einer Menge an Futter, die von einem individuellen milcherzeugenden Tier (10) in der Fütterungsvorrichtung (2, 20) und in der Tränkvorrichtung (3, 30) konsumiert wird, wobei die Steuermittel (40) ausgelegt sind, auf Basis der erkannten Menge an Futter die Dosis und/oder die Zusammensetzung des dem Trinkwasser für das milcherzeugende Tier (10) zuzuführenden Kraftfutters festzulegen.

2. Stall (1) nach Anspruch 1, die Erkennungsmittel (50) zum Erkennen von wenigstens einem Trinkmerkmal eines milcherzeugenden Tiers (10) während des Tränkens des milcherzeugenden Tiers (10) in der Tränkvorrichtung (3, 30), insbesondere das Volumen an pro Zeiteinheit konsumierter Flüssigkeit, umfasst.

3. Stall (1) nach Anspruch 2, wobei die Steuermittel (40) aktiv mit den Erkennungsmitteln (50) verbunden sind und ausgelegt sind, auf Basis des Trinkmerkmals die Dosis und/oder die Zusammensetzung des dem Trinkwasser für das milcherzeugende Tier (10) zuzuführenden Kraftfutters festzulegen.

4. Stall (1) nach Anspruch 2 oder 3, wobei die Steuermittel (40) einen Speicher (51) zum Speichern von Informationen von den Erkennungsmitteln (50) in Bezug auf das Trinkmerkmal eines individuellen milcherzeugenden Tiers (10) umfassen, und wobei die Steuermittel (40) ausgelegt sind, auf der Basis der Informationen die Dosis und/oder die Zusammensetzung des dem Trinkwasser für das milcherzeugende Tier (10) zuzuführenden Kraftfutters festzulegen.

5. Stall (1) nach einem beliebigen der Ansprüche 1-4, wobei die Steuermittel (40) ausgelegt sind, mit Hilfe der Fütterungsvorrichtung (2, 20) und der Zufuhrmittel (33) einem milcherzeugenden Tier (10) eine im Voraus festgelegte Futterration bereitzustellen, insbesondere pro Tag.

6. Stall (1) nach Anspruch 5, wobei die Steuermittel (40) ausgelegt sind, die Futterration für das individuelle milcherzeugende Tier (10) auf der Basis von wenigstens einem Datenelement in Bezug auf das milcherzeugende Tier festzulegen, wobei das wenigstens eine Datenelement insbesondere eine Milchleistung des milcherzeugenden Tiers, eine Laktationsphase des milcherzeugenden Tiers, eine Körperkonditionsbeurteilung des milcherzeugenden Tiers oder ein Gewicht des milcherzeugenden Tiers umfasst.

7. Stall (1) nach einem beliebigen der Ansprüche 1-6, wobei die Tränkvorrichtung (3, 30) ausgelegt ist, milcherzeugenden Tieren (10) Trinkwasser in fließender Form bereitzustellen.

8. Stall (1) nach Anspruch 7, wobei die Zufuhrmittel (33) zum Zuführen von Kraftfutter an das Trinkwasser ausgelegt sind, das Kraftfutter in einen Strom von Trinkwasser einzuleiten.

## Revendications

1. Étable pour animaux (1) destinée à recevoir un certain nombre d'animaux laitiers (10), comprenant
au moins un dispositif d'alimentation (2, 20) pour fournir aux animaux laitiers (10) des aliments, y compris des aliments concentrés, configuré pour doser les aliments des animaux laitiers individuels (10) ;
des moyens de commande (40), configurés pour déterminer l'identité d'un animal laitier individuel (10) au niveau du dispositif d'alimentation (2, 20) et, en fonction de l'identité déterminée, pour déterminer une dose et/ou une composition des aliments à fournir audit animal laitier (10) par le dispositif d'alimentation (2, 20) ;
au moins un dispositif à abreuvoir séparé (3, 30) pour fournir de l'eau potable aux animaux laitiers (10), configuré pour abreuver les animaux laitiers (10) sur une base individuelle ;
des moyens d'alimentation (33) pour fournir des aliments concentrés, en particulier au moins des aliments concentrés hydrosolubles ou des aliments concentrés miscibles à l'eau, à l'eau potable à fournir aux animaux laitiers (10) par le dispositif à abreuvoir (3, 30), dans laquelle les moyens de commande (40) sont en outre configurés pour déterminer l'identité d'un animal laitier individuel (10) au niveau du dispositif à abreuvoir (3, 30) et, en fonction de l'identité déterminée, pour déterminer une dose et/ou une composition des aliments concentrés à fournir à l'eau potable pour ledit animal laitier (10) ; et
des moyens de détection (52) pour détecter une quantité d'aliments consommée par un animal laitier individuel (10) dans le dispositif d'alimentation (2, 20) et dans le dispositif à abreuvoir (3, 30), dans laquelle les moyens de commande (40) sont configurés pour déterminer, sur la base de la quantité détectée d'aliments, la dose et/ou la composition des aliments concentrés à fournir à l'eau potable pour ledit animal laitier (10).

2. Étable pour animaux (1) selon la revendication 1, comprenant des moyens de détection (50) pour détecter au moins une caractéristique de consommation d'eau d'un animal laitier (10) pendant l'abreuvage de l'animal laitier (10) dans le dispositif à abreuvoir (3, 30), en particulier le volume de liquide consommé par unité de temps.

3. Étable pour animaux (1) selon la revendication 2, dans laquelle les moyens de commande (40) sont connectés activement aux moyens de détection (50) et sont configurés pour déterminer, sur la base de la caractéristique de consommation d'eau, la dose et/ou la composition des aliments concentrés à fournir à l'eau potable pour l'animal laitier (10).

4. Étable pour animaux (1) selon la revendication 2 ou 3, dans laquelle les moyens de commande (40) comprennent une mémoire (51) pour stocker des informations provenant des moyens de détection (50) concernant la caractéristique de consommation d'eau d'un animal laitier individuel (10), et dans laquelle les moyens de commande (40) sont configurés pour déterminer, sur la base desdites informations, la dose et/ou la composition des aliments concentrés à fournir à l'eau potable pour ledit animal laitier (10).

5. Étable pour animaux (1) selon l'une quelconque des revendications 1 à 4, dans laquelle les moyens de commande (40) sont configurés pour fournir, à l'aide du dispositif d'alimentation (2, 20) et des moyens d'alimentation (33), une ration d'aliments prédéterminée à un animal laitier (10), en particulier par jour.

6. Étable pour animaux (1) selon la revendication 5, dans laquelle les moyens de commande (40) sont configurés pour déterminer la ration d'aliments de l'animal laitier individuel (10) sur la base d'au moins une donnée relative audit animal laitier, dans laquelle la ou les données comprennent en particulier un rendement en lait de l'animal laitier, une phase de lactation de l'animal laitier, une valeur d'état corporel de l'animal laitier ou un poids de l'animal laitier.

7. Étable pour animaux (1) selon l'une quelconque des revendications 1 à 6, dans laquelle le dispositif à abreuvoir (3, 30) est configuré pour fournir de l'eau potable à des animaux laitiers (10) sous une forme fluide.

8. Étable pour animaux (1) selon la revendication 7, dans laquelle les moyens d'alimentation (33) destinés à fournir des aliments concentrés à l'eau potable sont configurés pour introduire les aliments concentrés dans un courant d'eau potable.
